(19) Europäisches Patentamt
European Patent Office
Office européen des brevets

(11) **EP 2 045 162 B1**

(12) **EUROPÄISCHE PATENTSCHRIFT**

(45) Veröffentlichungstag und Bekanntmachung des Hinweises auf die Patenterteilung:
**06.09.2017 Patentblatt 2017/36**

(51) Int Cl.:
*B60W 30/16* (2012.01)      *B60W 30/18* (2012.01)
*B60W 10/06* (2006.01)      *B60W 10/02* (2006.01)
*F16D 48/08* (2006.01)      *F16H 3/00* (2006.01)

(21) Anmeldenummer: **08017250.5**

(22) Anmeldetag: **01.10.2008**

(54) **Verfahren zur Steuerung eines automatischen, insbesondere automatisierten Getriebes eines Kraftfahrzeugs, vorzugsweise eines Doppelkupplungsgetriebes**

Method for controlling an automatic, particularly automated transmission of a motor vehicle, preferably a double clutch transmission

Procédé de commande d'un engrenage automatique, notamment d'un engrenage automatisé d'un véhicule automobile, de préférence d'un engrenage à embrayage double

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **02.10.2007 DE 102007047363**

(43) Veröffentlichungstag der Anmeldung:
**08.04.2009 Patentblatt 2009/15**

(73) Patentinhaber: **Volkswagen Aktiengesellschaft 38440 Wolfsburg (DE)**

(72) Erfinder:
• **Kalms, Rene**
**38110 Braunschweig (DE)**
• **Springstubbe, Matthias**
**38104 Braunschweig (DE)**

(56) Entgegenhaltungen:
**EP-A2- 1 342 607      WO-A2-03/074894**
**DE-A1- 10 343 178      DE-A1- 10 349 445**
**US-A1- 2006 161 325**

**Beschreibung**

Die Erfindung betrifft ein Verfahren zur Steuerung der Kupplung eines automatischen, insbesondere automatisierten Getriebes eines Kraftfahrzeugs, vzw. eines Doppelkupplungsgetriebes, gemäß den Merkmalen des Oberbegriffs des Patentanspruchs 1.

Im Stand der Technik sind unterschiedliche Verfahren zur Steuerung von Getrieben in Kombination mit einer automatischen Distanzregelung (ACC-adaptive cruise control) bekannt. Bei der automatischen Distanzregelung wird die Position und die Geschwindigkeit, insbesondere eines vorausfahrenden Fahrzeugs mit einem Sensor ermittelt und die Geschwindigkeit sowie der Abstand des mit dem Distanzregelungs-System ausgerüsteten nachfolgenden Fahrzeugs entsprechend adaptiv, insbesondere mit automatischen Motor- und/oder Bremseingriffen geregelt (Längsregelung).

Insbesondere bei geringeren Geschwindigkeiten und/oder geringen Beschleunigungen/Verzögerungen ist der Steuerungsaufwand bzw. Regelungsaufwand für eine derartige ACC-Funktion bei Getrieben, insbesondere in Verbindung mit Verbrennungsmotoren äußerst komplex, insbesondere bei Geschwindigkeiten, bei denen die Drehzahl des Motors im Leerlauf läuft (etwa 600 Umdrehungen pro Minute), die Getriebeeingangswelle jedoch eine geringere Drehzahl hat. Da die Motordrehzahl diese Leerlaufdrehzahl nicht unterschreiten kann, wird die Fahr-Geschwindigkeit bei derartigen Kriechvorgängen nicht über den Motor, sondern letztendlich - bisher im Stand der Technik - über die entsprechend schleifende Kupplung geregelt. Problematisch hierbei ist, dass es zu steuertechnischen "Konfliktsituationen" zwischen dem Motorsteuergerät im ACC-Betrieb und dem separat vorgesehenen Getriebesteuergerät kommen kann, denn sowohl im Motorsteuergerät als auch im Getriebesteuergerät arbeitet eine Regelung, die jeweils versucht eine Soll-Beschleunigung einzuregeln, was aber - bei unterschiedlichen Quellen und/oder unterschiedlichen Signallaufzeiten und/oder systembedingten Unterschieden in der Reaktion der Regelstrecken - für die Ist-Beschleunigungswerte problematisch sein kann, insbesondere dann, wenn gleichzeitig weitere - teilweise unvereinbare - Regelziele wie bspw. schwankungsarme Fahrzeuggeschwindigkeit, ruhiger Motor-Drehzahlverlauf und/oder sprungfreie Momentenübertragungen erreicht werden müssen. Daher wird dies nur durch aufwendige Steuerungsprogramme auf sehr kostenintensive Weise wie auch teilweise mit zusätzlich vorgesehenen steuertechnischen weiteren Komponenten geregelt.

So ist aus der gattungsbildenden DE 103 43 178 A1 ein Fahrerassistenzsystem für Kraftfahrzeuge bekannt, wobei mit Hilfe eines Strategiemoduls bzw. eines Lernmoduls die Beschleunigungen des Fahrzeugs gemäß einer vorgegebenen Längsführungsstrategie realisiert werden. Hierbei erfasst das Lernmodul das individuelle Fahrverhalten des jeweiligen Fahrers und passt die automatische Steuerung an die jeweilige Fahrweise des individuellen Fahrers an.

Weiterhin ist aus der DE 103 49 445 A1 ein Verfahren bekannt, wobei bei der Anfahrt des Kraftfahrzeuges zeitweise das vom Fahrer gewünschte Motormoment aus einer virtuellen Pedalstellung bestimmt wird, wobei die virtuelle Pedalstellung größer ist als die tatsächliche Pedalstellung. Hierbei wird die virtuelle Pedalstellung berechnet.

Der Erfindung liegt daher die Aufgabe zugrunde, die zuvor genannten Nachteile zu vermeiden, insbesondere eine kostengünstige und komfortable Steuerung für den Anfahrvorgang und/oder den Kriechvorgang eines Kraftfahrzeugs anzugeben.

Die zuvor aufgezeigte Aufgabe ist nun durch die Merkmale des Patentanspruchs 1 gelöst. Die Kupplung wird - bei aktivierter automatischer Distanzregelung - im Anfahrvorgang und/oder im Kriechvorgang derart angesteuert, so dass hierdurch ein Wandlerverhalten nachgebildet wird. Insbesondere werden nun bei der bevorzugten Ausführungsform der Erfindung die entsprechende Kupplung eines Doppelkupplungsgetriebes so angesteuert, dass das passive Verhalten eines Wandlers nachgebildet wird. Damit läuft im Getriebesteuergerät kein Regler für die Soll-Beschleunigung mehr, sondern die Momente an den Kupplungen werden nur noch in Abhängigkeit von den Motorgrößen und den Vorgaben des "ACC-Managers" bzw. eines ACC-Steuergerätes, das vzw. als Teil des Motorsteuergerätes ausgebildet ist, gesteuert. Das Motorsteuergerät behält daher gegenüber dem Getriebesteuergerät die "Steuerhoheit", so dass nicht mehr die beiden jeweiligen in dem Getriebesteuergerät bzw. in dem Motorsteuergerät vorgesehenen Regler gegeneinander arbeiten. Die Erfindung ist also für den "Follow to Stop-Betrieb" entsprechend vorteilhaft ausgebildet, wenn eine automatische Distanzregelung mit der Steuerung eines Doppelkupplungsgetriebes für den Anfahr- und/oder Kriechvorgang des Kraftfahrzeugs kombiniert werden, wie zuvor beschrieben. Die eingangs genannten Nachteile sind daher vermieden und entsprechende Vorteile erzielt.

Es gibt nun eine Vielzahl von Möglichkeiten, dass erfindungsgemäße Verfahren in vorteilhafter Art und Weise auszugestalten und weiterzubilden. Hierzu darf zunächst auf die im

Patentanspruch 1 nachgeordneten Patentansprüche sowie auf die nachfolgende Beschreibung und die dazugehörende Zeichnung, anhand der die Erfindung noch näher erläutert werden soll, verwiesen werden. In der Zeichnung zeigt:

Fig. 1    in schematischer Darstellung die wesentlichen Komponenten der hier verwirklicht Steuerung,

Fig. 2    in schematischer Darstellung den allgemeinen Zusammenhang zwischen der Drehzahl der Motorwelle (auch durch Darstellung der Leerlaufdrehzahl des Motors) sowie der Drehzahl der Getriebeeingangswelle unter der Einwirkung der Kupplungssteuerung,

Fig. 3 in schematischer Darstellung eine Gesamtübersicht der erfindungsgemäßer verwirklichten "Wandler-Steuerung", die für ein Doppelkupplungsgetriebe angepasst ist, wobei

Fig. 4 das Steuer-Diagramm für die Untergruppe der in Fig. 3 dargestellten "hydrodynamischen Kupplung" zeigt, und

Fig. 5 die der "Wandler-Steuerung" zugrunde liegenden mathematischen Formeln bzw. Abbildungen für die Erstellung/Abspeicherung der im Getriebesteuergerät abgespeicherten Wandlerkennlinie in schematischen Darstellungen zeigt.

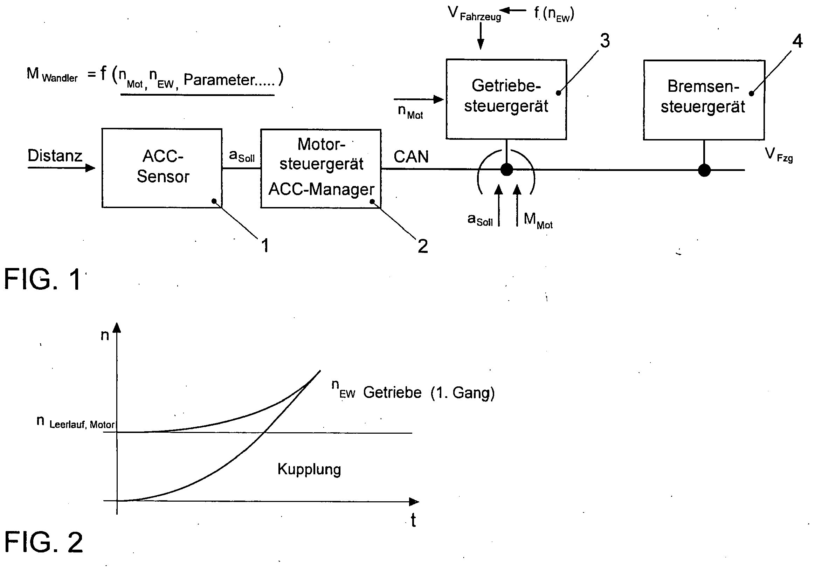

Die Fig. 1 bis 5 zeigen teilweise in schematischer Darstellung das Verfahren zur Steuerung der Kupplung bzw. eines automatischen, insbesondere automatisierten Getriebes eines Kraftfahrzeuges, vzw. hier eines Doppelkupplungsgetriebes, bei dem das erfindungsgemäße Verfahren angewendet werden soll.

Für das hier nicht im Einzelnen dargestellte Kraftfahrzeug ist eine automatische Distanzregelung (ACC) vorgesehen, sowie in Fig. 1 angedeutet. Bei dieser automatischen Distanzregelung wird der Abstand und die Geschwindigkeit, insbesondere eines vorausfahrenden Fahrzeugs mit dem Sensor 1 ermittelt und die Geschwindigkeit bzw. das Beschleunigungsverhalten (positiv oder negativ) des mit den erfindungsgemäßen Verfahren ausgerüsteten nachfolgenden Fahrzeugs entsprechend adaptiv mit Motor- und/oder Bremseingriff automatisch geregelt bzw. gesteuert (so genannte "Längsregelung"). Hierzu weist das System vzw. ein Motorsteuergerät 2 zur Steuerung der Drehzahl des Motors und weiterhin zur Steuerung der Schaltung im Getriebe bzw. zur Steuerung der jeweiligen Kupplung ein Getriebesteuergerät 3 auf, die die entsprechenden Steuerungen realisieren. Weiterhin ist ein Bremssteuergerät 4 vorgesehen, so wie in Fig. 1 dargestellt.

Insbesondere bei der Normalfahrt ist eine automatische Distanzregelung (ACC) unproblematisch, insbesondere aber auch während eines Anfahrvorgangs und/oder eines Kriechvorgangs des Kraftfahrzeuges soll nun eine aktive automatische Distanzregelung bzw. Distanzsteuerung realisiert werden, ohne das ein umfangreicher Steuerungsaufwand und/oder Kostenaufwand durch konstruktive Veränderung der Regelstrecke und/oder Verwendung zusätzlicher regeltechnischer bzw. steuertechnischer Bauelemente notwendig ist.

Dies wird nun dadurch realisiert, dass die Kupplung - bei aktivierter automatischer Distanzregelung - im Anfahrvorgang und/oder im Kriechvorgang derart angesteuert wird, so dass hierdurch ein Wandlerverhalten nachgebildet wird. Es ist daher nun vorgesehen, die ACC-Funktion bei einem Doppelkupplungsgetriebe auch bei sehr geringen Geschwindigkeiten umzusetzen und zwar insbesondere auch bei Geschwindigkeiten, bei denen die Drehzahl des Motors im Leerlauf läuft (etwa 600 Umdrehungen pro Minute). Da die Motordrehzahl diese Leerlaufdrehzahl nicht unterschreiten kann, wird die Fahr-Geschwindigkeit bei derartigen Kriechvorgängen nicht über den Motor, sondern nun über die Kupplung und das hier über nachgebildete Wandlerverhalten gesteuert bzw. geregelt. Dies kann auch bei einem Anhaltevorgang geschehen, wenn die Getriebe-Eingangswellendrehzahl unter die Motor-Leerlauf-Drehzahl fällt, insbesondere gilt dies also bei geringeren Beschleunigungen und/oder Verzögerungen.

Für einen Wandler ist "im physikalischen Sinne" zunächst kennzeichnend, dass in diesem ein Antriebsteil, ein Abtriebsteil und dazwischen ein Medium, insbesondere ein Öl vorgesehen sind und vzw. die "Schaufelräder" des Wandlers entsprechend dem gewünschten Übertragungsverhalten voreingestellt sind. Der Wandler realisiert also eine Drehzahldifferenz zwischen seinem Antriebsteil und seinem Abtriebsteil. Grundsätzlich gilt, desto größer die Motordrehzahl ist und desto größer die realisierte Drehzahldifferenz ist, desto größer ist auch das Moment, das über den Wandler übertragen werden kann. Genau dieses "Wandlerverhalten" soll vzw. in Teilabschnitten des insgesamt verfügbaren Arbeitsbereiches eines Wandlers nun durch die entsprechende erfindungsgemäße Ansteuerung der Kupplung im Anfahrvorgang und/oder im Kriechvorgang nachgebildet werden, soweit dieses vorteilhafter ist als grundlegend vorhandene Ansprechverhalten einer nass- oder trocken laufenden Kupplung ohne Wandler wie diese vzw. in einem Doppelkupplungsgetriebe eingesetzt sind.

Dies wird nun so realisiert, dass das Motorsteuergerät 2 gegenüber dem Getriebesteuergerät 3 die Steuerhoheit beibehält. Wie Fig. 1 zeigt wird durch das Motorsteuergerät 2 aufgrund der von der Distanzregelung übermittelten Daten, insbesondere aufgrund der übermittelten Soll-Beschleunigung $a_{Soll}$ die Motordrehzahl, also die Drehzahl der Motorwelle und/oder das Motormoment eingestellt. Während das Getriebesteuergerät 3 vzw. die Drehzahl der Motorwelle selber ermittelt bzw. aus dem CAN-Bus holt wird dem Getriebesteuergerät 3 über das Motorsteuergerät 2 das gewünschte Motormoment als Wert zugeleitet.

Im Getriebesteuergerät 3 ist nun bzw. sind nun die Daten für mindestens eine spezifische Wandlerkennlinie abgespeichert. In Abhängigkeit dieser spezifisch abgespeicherten Wandlerkennlinie wird nun die jeweilige Kupplung vzw. eine der Kupplungen des Doppelkupplungsgetriebes so angesteuert, insbesondere der Schlupf dieser Kupplung so gesteuert, dass ein übliches Wandlerverhalten nachgebildet wird, wobei die Drehzahl der Motorwelle - nach wie vor- über das Motorsteuergerät 2 gesteuert wird, nämlich das Motorsteuergerät 2 also seine Steuerhoheit auch über die von

ihm realisierbare ($a_{soll}$) Beschleunigung beibehält.

Hierdurch wird die Ist-Beschleunigung des Fahrzeugs nun durch das nachgebildete Wandlerverhalten der entsprechenden Kupplung realisiert. Insbesondere ist die spezifische Wandlerkennlinie so ausgebildet, dass insbesondere auch bei einer anliegenden Motor-Leerlauf-Drehzahl ein kriechendes Kraftfahrzeugs realisiert ist, insbesondere nämlich an der Getriebeeingangswelle eine Drehzahl realisierbar ist, die unter der Motor-Leerlauf-Drehzahl liegt.

Das Gesamtverfahren ist dahingehend applizierbar ausgelegt bzw. auslegbar, dass durch Hinterlegung einer oder mehrerer spezifischer Kennlinien (inkl. dynamischer Überblendung) einerseits viel niedrigere Kriechgeschwindigkeiten - bis hinab zur systembedingten Einleitung des Anhaltevorgangs (Bremse zu) - auch dauerhaft erreicht werden können als bei einem physikalisch/realverbauten Wandler; andererseits hochdynamisch bis hin zum "normalen" Anfahrverhalten der/des verbauten Kupplung/Getriebes auf stärkere Beschleunigungsanforderungen reagieren kann. Das realisierte Verfahren ermöglicht es dem Motor durch Belassen der Drehzahl auf Leerlauf das Fahrzeug gering zu beschleunigen und durch Anhebung der Drehzahl jede gewünschte höhere Beschleunigung einzustellen.

Die entsprechende Kupplung wird vzw. über den Kühlölvolumenstrom und/oder über den Hydraulikölvolumenstrom bzw. über den Hydraulikdruck entsprechend angesteuert, um dieses Wandlerverhalten nachzubilden.

Das Getriebesteuergerät 3, insbesondere bei einem Doppelkupplungsgetriebe stellt also für die Steuerung der Kupplung vzw. allein auf die Motordrehzahl (nMot) bzw. die Eingangswellendrehzahl des Getriebes (nEW) ab. Diese Daten werden dem Getriebesteuergerät 3 vzw. über eigene Sensoren zugeleitet bzw. kann das Getriebesteuergerät 3 diese Daten vzw. selbständig unabhängig vom Motorsteuergerät 2 ermitteln. Aber unbedingt notwendig sind die Ermittlung der Drehzahlen der Motorwelle und der Getriebeeingangswelle. Hierbei wird der - bisher übliche - Parameter der Soll-Beschleunigung daher nicht mehr für die Steuerung der Kupplung vom Getriebesteuergerät 3 berücksichtigt bzw. benötigt bzw. dient lediglich der oben beschriebenen Überblendung/Vorsteuerung. (Hierbei gilt: Drehmoment $M_{not}=f(nMot, nEW)$).

Für Motoren, die eine stabile Leerlaufdrehzahl einhalten, wenn Geschwindigkeiten unter der Leerlauf-Drehzahl ($n_{EW}<n_{Mot}$) erreicht werden und die in der Lage sind, dass Leerlauf-Moment unabhängig von der Drehzahl anzuheben, wenn es vom Getriebe/der Kupplung abgenommen wird, ist eine weitere Variante vorgehalten, die aus der Sollbeschleunigung ein Sollkupplungsmoment berechnet:

M_Kupp = m_Fzg * a_Fzg_Soll * r_Rad / i_Getriebe. Je nach Motor-Getriebe-Kombination kann

Je nach Motor-Getriebe-Kombination kann so dass komfortablere (Fahrerempfinden) und/oder kraftstoffsparendere Verfahren eingesetzt werden.

Dem Verfahren liegt daher insbesondere die Idee zugrunde, das Steuerungsprinzip (als mathematische Funktion zur Ansteuerung der Kupplung) eines automatischen Wandlers auf ein Doppelkupplungsgetriebe anzuwenden und anzupassen, um ein ACC auch für den Kriechvorgang, d.h. Fahren unterhalb der Leerlaufzahl des Motors, zu ermöglichen, der vom Fahrer als komfortabel empfunden wird. Vzw. nutzt das Getriebesteuergerät 3 demnach die aktuelle Motorwellendrehzahl und die aktuelle Drehzahl der Getriebeeingangswelle als Eingangsgrößen für den Steuerungsalgorythmus, wobei innerhalb des Getriebesteuergerätes die Daten für mindestens eine spezifische Wandlerkennlinie (vzw, für mehrere spezifische Wandlerkennlinien) abgespeichert ist, mit deren Hilfe ein von der Drehzahldifferenz bestimmtes Kupplungs-Sollmoment dann abgeleitet werden kann.

Im Ergebnis darf daher nochmal folgendes kurz zusammengefasst werden:

In den normalen Fällen - bisher im Stand der Technik - kommt es zu einem Zusammenspiel zwischen dem Getriebegler des Getriebesteuergerätes 3 und dem Motorregler des Motorsteuergerätes 2 im Betrieb der automatischen Distanzregelung ACC. Hierbei sendet die ACC-Regelung eine Soll-Beschleunigung, aus der sich das erforderliche Motormoment/ Kupplungsmoment (für das Getriebe) ermitteln lässt, dies machen sowohl der Motorregler als auch der Getrieberegler. Da der Getrieberegler interne Drehzahlsensoren verwenden kann, kann er schneller und sicherer auf den Ist-Zustand zugreifen als der Motorregler, der auf die CAN-Signale angewiesen ist (bspw. bei Bremsen-Botschaften). Damit beide Regler synchron arbeiten können, wäre ein sehr hoher technischer Steueraufwand und/oder aufwendige Anpassung jeder einzelnen Motor-Getriebe-Fahrzeug-Kombination und damit verbundene sehr hohe Kosten notwendig.

Hier setzt das Verfahren an, indem nun - bei ACC-Betrieb - im Anfahrvorgang und/oder im Kriechvorgang des Kraftfahrzeugs die Kupplung so angesteuert wird, dass ein Wandlerverhalten nachgebildet wird. Hierbei behält das Motorsteuergerät 2 die Steuerhoheit, da im Getriebesteuergerät 3 der aktiven Kupplungsansteuerung ein Steueralgorythmus vorangestellt wird, welcher der Gesamt-Regelstrecke "Getriebe" das passive Verhalten eines Wandlers verleiht. Es wird also nicht mehr - wie bisher - mit einem PI-Regler die verbleibende Abweichung zwischen der Ist- und der Soll-Beschleunigung ausgeregelt, sondern für den Fahrzustand des Anfahrvorgangs bzw. des Kriechvorgang setzt nunmehr bei der Steuerung der Kupplung die Wandlernachbildung an.

Während die Fig. 1 den schematischen Aufbau mit dem Sensor 1, dem Motorsteuergerät 2, dem Getriebesteuergerät 3 sowie der Bremsvorrichtung bzw. dem Bremssteuergerät 4 zeigt ist in Fig. 2 ein allgemeiner Zusammenhang der Verläufe zwischen Motordrehzahl und Getriebeeingangswellendrehzahl dargestellt.

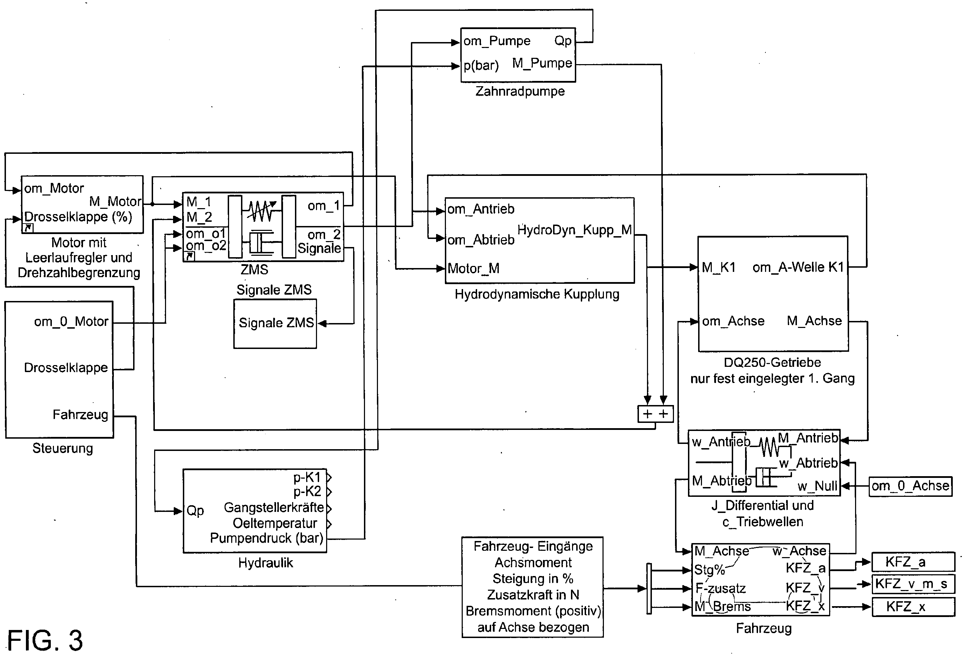

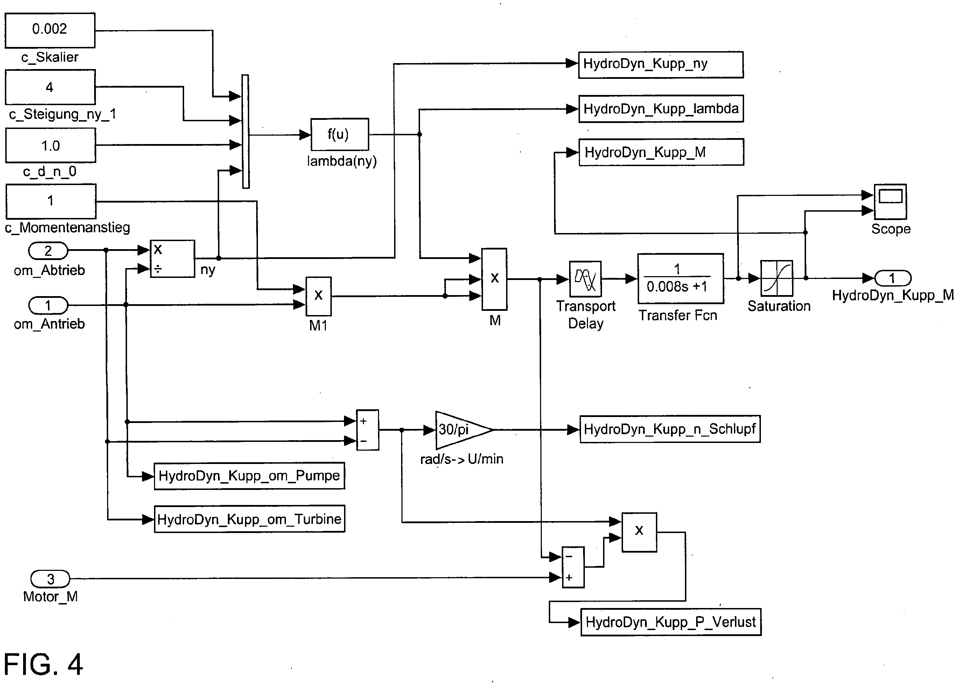

Die Fig. 3 zeigt dann im Wesentlichen eine schematische Gesamtübersicht über eine derartige Wandler-Steuerung, die für ein Doppelkupplungsgetriebe angepasst ist, in Form eines Matlab/Simulink-Modells bzw. einer Signalflussstruktur, während die Fig. 4 die für die in der Fig. 3 dargestellte "hydrodynamische Kupplung" das entsprechende schematische Steuer-Diagramm für diese Untergruppe zeigt.

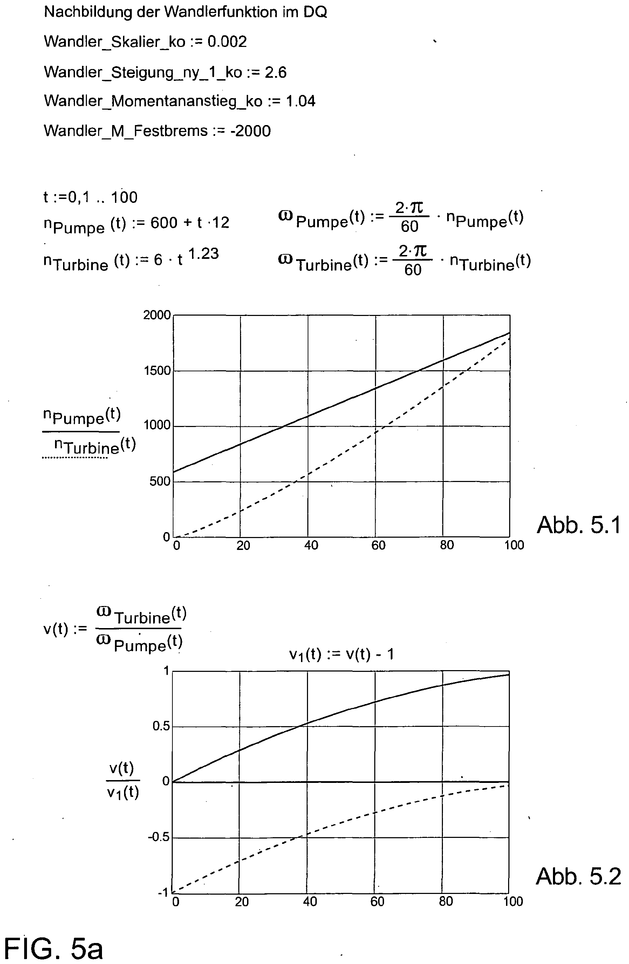

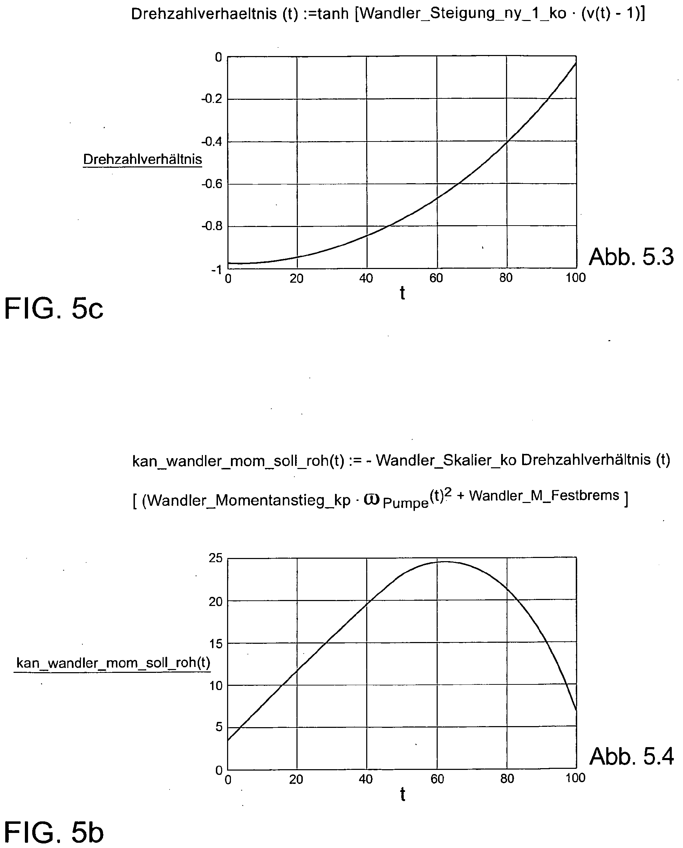

Wie das Steuerungsverhalten eines Wandlers nachzubilden ist, wird aus den Fig. 5a und 5b, hier insbesondere aus den Abbildungen 5.1 bis 5.4 deutlich, wobei in der Abbildung 5.4 eine spezifische Wandlerkennlinie dargestellt ist, die in dem Getriebesteuergerät 3 abgespeichert sein kann. Vzw. sind in dem Getriebesteuergerät 3 auch unterschiedliche Wandlerkennlinien abgespeichert, die jeweils mit den einzelnen Komponenten des Wandlers und seinen spezifischen physikalischen Funktionen, teilweise dargestellt in Abbildungen 5.1 bis 5.3 entsprechend ermittelbar ist. Dies ist abhängig vom jeweiligen Anwendungsfall. Die in den Fig. 5a-c beschriebene Formel, die dem hydrodynamischen Wandler zugrunde liegt, kann auch folgendermaßen beschrieben werden:

$$M = -k_2 \cdot \tanh\left[k_1 \cdot \left(\frac{\omega_{Turbine}}{\omega_{Pumpe}} - 1\right)\right] \cdot \left[(k_3 \cdot \omega_{Pumpe})^2 + k_4\right]$$

mit den Konstanten

$k_1$ = Wandler_Steigung_ny_1_ko
$k_2$ = Wandler_Skalier_ko
$k_3$ = Wandler_Momentanstieg_ko
$k_4$ = Wandler_M_Festbrems_ko.

Der Wandler ist hierbei vorzugsweise aus Komfortgründen so abgestimmt, dass keine Momentenüberhöhung erfolgt, d.h. das Drehmoment im Getriebe ist nicht höher als das Motordrehmoment.

**Bezugszeichenliste**

| | |
|---|---|
| 1 | Sensor |
| 2 | Motorsteuergerät |
| 3 | Getriebesteuergerät |
| 4 | Bremssteuergerät |
| $a_{soll}$ | Beschleunigung |
| M Wandler | Drehmoment Wandler |
| $n_{Mot}$ | Drehzahl Motor |
| $n_{EW}$ | Drehzahl Eingangswelle |
| $V_{Fahrzeug}$ | Fahrzeug-Geschwindigkeit |
| $n_{Leenauf, Motor}$ | Drehzahl Motor im Leerlauf |
| om_Motor | Winkelgeschwindigkeit Motor |
| om_0_Motor | Winkelgeschwindigkeit Motor Startwert |
| M_Motor | Motormoment |
| $Q_p$ | Verlustleistung Pumpe |
| P(bar) | Druck in bar |
| M_Pumpe | Drehmoment Pumpe |
| om_Antrieb | Winkelgeschwindigkeit Antrieb |
| om_Abtrieb | Winkelgeschwindigkeit Abtrieb |
| HydroDyn_Kupp_M | Drehmoment hydrodynamische Kupplung |
| M_K1 | Drehmoment 1. Kupplung |
| om_A-welle K1 | Winkelgeschwindigkeit der Antriebswelle der K1 (1. Kupplung) |
| w_Antrieb | Winkelgeschwindigkeit Antriebswelle |
| M_Antrieb | Drehmoment Antriebswelle |

**EP 2 045 162 B1**

| | |
|---|---|
| w_Abtrieb | Winkelgeschwindigkeit Abtriebswelle |
| M_Abtrieb | Drehmoment Abtriebswelle |
| c_Triebwellen | Federsteifigkeiten Triebwelle |
| M_Achse | Achsmoment |
| Stg% | Steigung in % |
| F-zusatz | Zusatzkraft in N |
| M-Brems | Bremsmoment |
| KFZ_a | Beschleunigung Fahrzeug |
| KFZ_v | Geschwindigkeit Fahrzeug |
| KFZ_x | Weg Fahrzeug |
| Fcn | Funktion |
| Saturation | Sättigung |
| Scope | Oszilloskop |
| P | Leistung |

**Patentansprüche**

1. Verfahren zur Steuerung der Kupplung eines automatischen, insbesondere automatisierten Getriebes eines Kraftfahrzeuges, vzw. eines Doppelkupplungsgetriebes, wobei für das Kraftfahrzeug eine automatische Distanzregelung (ACC), insbesondere zu einem vorausfahrenden Fahrzeug vorgesehen ist, und wobei die Drehzahl des Motors über ein Motorsteuergerät (2) und die Schaltungen im Getriebe sowie die Steuerung der Kupplung, insbesondere der jeweiligen Kupplung eines Doppelkupplungsgetriebes, über ein Getriebesteuergerät (3) realisiert werden, wobei nicht nur während der Normalfahrt, sondern auch im Anfahrvorgang und/oder im Kriechvorgang des Kraftfahrzeuges eine aktive Distanzregelung bzw. Distanzsteuerung realisiert ist, **dadurch gekennzeichnet dass** die Kupplung - bei aktivierter automatischer Distanzregelung - im Anfahrvorgang und/oder im Kriechvorgang derart angesteuert wird, so dass hierdurch ein Wandlerverhalten nachgebildet wird, wobei das Motorsteuergerät (2) gegenüber dem Getriebesteuergerät (3) die Steuerhoheit beibehält, nämlich dass das Motorsteuergerät (2) aufgrund der von der Distanzregelung übermittelten Daten, insbesondere aufgrund der übermittelten Soll-Beschleunigung, die Motordrehzahl, also die Drehzahl der Motorwelle und/oder das Motormoment einstellt, um die angeforderte Beschleunigung zu erreichen und das gewünschte Motormoment dem Getriebesteuergerät zuleitet, dass das Getriebesteuergerät (3) die Drehzahl der Motorwelle selber ermittelt und innerhalb des Getriebesteuergerätes (3) die Daten für mindestens eine spezifische Wandlerkennlinie abgespeichert sind, wobei die Wandlerkennlinie so ausgebildet ist, dass auch bei einer anliegenden Motor-Leerlauf-Drehzahl ein kriechendes Kraftfahrzeug realisiert ist, nämlich an der Getriebeeingangswelle eine Drehzahl realisierbar ist, die unter der Motor-Leerlauf-Drehzahl liegt.

2. Verfahren nach Anspruch 1, **dadurch gekennzeichnet, dass** die Kupplung in Abhängigkeit der spezifischen Wandlerkennlinie angesteuert wird, insbesondere der Schlupf der Kupplung so gesteuert wird, dass ein übliches Wandlerverhalten nachgebildet wird, wobei die Drehzahl der Motorwelle über das Motorsteuergerät (2) gesteuert wird.

3. Verfahren nach einem der Ansprüche 1 oder 2, **dadurch gekennzeichnet, dass** die Ist-Beschleunigung des Fahrzeuges durch das nachgebildete Wandlerverhalten der Kupplung realisiert wird.

4. Verfahren nach einem der Ansprüche 1 bis 3, **dadurch gekennzeichnet, dass** die spezifische Wandlerkennlinie so ausgebildet ist, dass insbesondere bei einer anliegenden Motor-Leerlauf-Drehzahl auch ein extremes langsames und dabei gleichmäßiges Kriechen des Kraftfahrzeuges realisiert ist.

5. Verfahren nach einem der Ansprüche 1 bis 4, **dadurch gekennzeichnet, dass** die Doppelkupplung eines Doppelkupplungsgetriebes bzw. eine der beiden Kupplungen entsprechend angesteuert, insbesondere der Kühlölvolumenstrom und/oder der Hydraulikölvolumenstrom bzw. der Hydraulikdruck entsprechend gesteuert wird.

**Claims**

1. Method for controlling the clutch of an automatic, in particular automated, transmission of a motor vehicle, preferably a double clutch transmission, automatic distance control (ACC) in particular from a vehicle travelling in front, being provided for the motor vehicle, and the rotational speed of the engine being implemented by an engine control device (2) and the gear shifting in the transmission and the control of the clutch, in particular the respective clutch of a double clutch transmission, being implemented via a transmission control device (3), active distance regulation or distance control being implemented not just during normal travel but also during the starting operation and/or in creep mode of the motor vehicle, **characterized in that -** with the automatic distance regulation activated - the clutch is driven during the starting operation and/or in creep mode in such a way that, as a result, a converter behaviour is simulated, the engine control device (2) maintaining control supremacy with respect to the transmission control device (3), specifically **in that** the engine control device (2) sets the engine speed, that is to say the rotational speed of the engine shaft and/or the engine torque, on the basis of data transmitted from the distance regulation, in particular on the basis of the transmitted intended acceleration, in order to achieve the requested acceleration, and feeds the desired engine torque to the transmission control device, **in that** the transmission control device (3) itself determines the rotational speed of the engine shaft and, the data for at least one specific converter characteristic curve are stored within the transmission control device (3), wherein the converter characteristic curve is formed in such a way that a creeping motor vehicle is realised even when an engine idle speed is present, specifically a rotational speed which lies below the engine idle speed can be implemented on the transmission input shaft.

2. Method according to Claim 1, **characterized in that** the clutch is driven on the basis of the specific converter characteristic curve, in particular the slip of the clutch is controlled in such a way that a conventional converter behaviour is simulated, the rotational speed of the engine shaft being controlled via the engine control device (2).

3. Method according to either of Claims 1 and 2, **characterized in that** the actual acceleration of the vehicle is implemented by the simulated converter behaviour of the clutch.

4. Method according to one of Claims 1 to 3, **characterized in that** the specific converter characteristic curve is formed in such a way that, in particular when an engine idle speed is present, extremely slow and uniform creeping of the motor vehicle is also implemented.

5. Method according to one of Claims 1 to 4, **characterized in that** the double clutch of a double clutch transmission or one of the two clutches is driven appropriately, in particular the cooling oil volume flow and/or the hydraulic oil volume flow or the hydraulic pressure is controlled appropriately.

**Revendications**

1. Procédé de commande de l'embrayage d'une transmission automatique, en particulier automatisée, d'un véhicule automobile, par exemple d'une transmission à double embrayage,
une régulation automatique de distance (ACC) du véhicule automobile, en particulier par rapport à un véhicule circulant en avant de lui, étant prévue,
le régime du moteur étant commandé par l'intermédiaire d'un appareil (2) de commande du moteur, les changements de rapport de la transmission et la commande de l'embrayage, notamment de chaque embrayage d'une transmission à double embrayage, étant commandés par l'intermédiaire d'un appareil (3) de commande de transmission,
une régulation active de la distance ou commande de distance étant réalisée non seulement en circulation normale mais également lors d'une opération de démarrage et/ou d'un patinage du véhicule automobile, **caractérisé en ce que**
lors d'un démarrage et/ou d'un patinage avec la régulation automatique de distance activée, l'embrayage est commandé de telle sorte qu'il en résulte une conversion dans laquelle l'appareil (2) de commande du moteur maintient la priorité de la commande par rapport à l'appareil (3) de commande de la transmission, à savoir **en ce que** l'appareil (2) de commande du moteur établit le régime du moteur et donc la vitesse de rotation de l'arbre moteur et/ou le couple moteur, en fonction des données transmises par la régulation de distance et en particulier en fonction de l'accélération de consigne qui a été transmise, pour atteindre l'accélération imposée, et applique le couple moteur souhaité sur l'appareil de commande de transmission de telle sorte que l'appareil (3) de commande de transmission détermine lui-même la vitesse de rotation de l'arbre moteur,
et les données d'au moins une ligne caractéristique spécifique de conversion sont conservées en mémoire dans l'appareil (3) de commande de transmission, la ligne caractéristique de conversion étant configurée de telle sorte que même lorsque le régime du moteur appliqué est le régime à vide, le véhicule automobile patine, c'est-à-dire que la vitesse de rotation obtenue sur l'arbre d'entrée de la transmission est située en dessous du régime du moteur à vide.

2. Procédé selon la revendication 1, **caractérisé en ce que** l'embrayage est commandé en fonction de la ligne caractéristique de conversion particulière, et en particulier **en ce que** le patinage de l'embrayage est commandé de telle sorte qu'il forme un comportement habituel de conversion, la vitesse de rotation de l'arbre du moteur étant commandée par l'intermédiaire de l'appareil (2) de commande du moteur.

3. Procédé selon l'une des revendications 1 ou 2, **caractérisé en ce que** l'accélération effective du véhicule automobile est obtenue en amenant l'embrayage à fonctionner en conversion.

4. Procédé selon l'une des revendications 1 à 3, **caractérisé en ce que** la ligne caractéristique de conversion spécifique est formée de telle sorte qu'en particulier lorsque le régime du moteur est le régime à vide, un patinage extrêmement lent et donc uniforme du véhicule automobile est obtenu.

5. Procédé selon l'une des revendications 1 à 4, **caractérisé en ce que** l'embrayage double d'une transmission à double embrayage ou l'un des deux embrayages sont commandés de manière appropriée, et en particulier l'écoulement volumique d'huile de refroidissement et/ou l'écoulement volumique d'huile hydraulique ou la pression hydraulique étant commandés de manière appropriée.

EP 2 045 162 B1

$$M_{\text{Wandler}} = f \left( n_{\text{Mot}}, n_{\text{EW}}, \text{Parameter}..... \right)$$

$V_{\text{Fahrzeug}} \longleftarrow f(n_{\text{EW}})$

| Distanz | ACC-Sensor | | Motor-steuergerät ACC-Manager | | Getriebe-steuergerät | Bremsen-steuergerät |

$a_{\text{Soll}}$

$n_{\text{Mot}}$

CAN

3

4

$a_{\text{Soll}}$   $M_{\text{Mot}}$

$V_{\text{Fzg}}$

1

2

## FIG. 1

$n$

$n_{\text{EW}}$ Getriebe (1. Gang)

$n_{\text{Leerlauf, Motor}}$

Kupplung

$t$

## FIG. 2

om_Pumpe    Qp

p(bar)    M_Pumpe

Zahnradpumpe

om_Motor

M_Motor

Drosselklappe (%)

Motor mit
Leerlaufregler und
Drehzahlbegrenzung

M_1
M_2
om_o1
om_o2

om_1

om_2
Signale

ZMS

Signale ZMS

Signale ZMS

om_Antrieb

om_Abtrieb    HydroDyn_Kupp_M

Motor_M

Hydrodynamische Kupplung

M_K1    om_A-Welle K1

om_Achse    M_Achse

DQ250-Getriebe
nur fest eingelegter 1. Gang

om_0_Motor

Drosselklappe

Fahrzeug

Steuerung

+ +

w_Antrieb    M_Antrieb

w_Abtrieb

M_Abtrieb    w_Null

om_0_Achse

J_Differential und
c_Triebwellen

Qp

p-K1
p-K2
Gangstellerkräfte
Oeltemperatur
Pumpendruck (bar)

Hydraulik

Fahrzeug- Eingänge
Achsmoment
Steigung in %
Zusatzkraft in N
Bremsmoment (positiv)
auf Achse bezogen

M_Achse    w_Achse

Stg%    KFZ_a

F-zusatz    KFZ_v

M_Brems    KFZ_x

Fahrzeug

KFZ_a

KFZ_v_m_s

KFZ_x

FIG. 3

**FIG. 4**

Nachbildung der Wandlerfunktion im DQ

Wandler_Skalier_ko := 0.002

Wandler_Steigung_ny_1_ko := 2.6

Wandler_Momentananstieg_ko := 1.04

Wandler_M_Festbrems := -2000

$t := 0, 1 .. 100$

$n_{Pumpe}(t) := 600 + t \cdot 12$       $\omega_{Pumpe}(t) := \dfrac{2 \cdot \pi}{60} \cdot n_{Pumpe}(t)$

$n_{Turbine}(t) := 6 \cdot t^{1.23}$       $\omega_{Turbine}(t) := \dfrac{2 \cdot \pi}{60} \cdot n_{Turbine}(t)$

$\dfrac{n_{Pumpe}(t)}{n_{Turbine}(t)}$

Abb. 5.1

$v(t) := \dfrac{\omega_{Turbine}(t)}{\omega_{Pumpe}(t)}$

$v_1(t) := v(t) - 1$

$\dfrac{v(t)}{v_1(t)}$

Abb. 5.2

# FIG. 5a

Drehzahlverhaeltnis (t) :=tanh [Wandler_Steigung_ny_1_ko · (v(t) - 1)]

Abb. 5.3

# FIG. 5c

kan_wandler_mom_soll_roh(t) := - Wandler_Skalier_ko Drehzahlverhältnis (t)

$$[ (\text{Wandler\_Momentanstieg\_kp} \cdot \omega_{\text{Pumpe}}(t)^2 + \text{Wandler\_M\_Festbrems} ]$$

Abb. 5.4

# FIG. 5b

**IN DER BESCHREIBUNG AUFGEFÜHRTE DOKUMENTE**

**In der Beschreibung aufgeführte Patentdokumente**

- DE 10343178 A1
- DE 10349445 A1